# EUROPEAN PATENT APPLICATION

(11) **EP 3 352 252 A1**
(43) Date of publication of application: **25.07.2018**
(21) Application number: 16846524.3
(22) Date of filing: 14.09.2016
(51) Int. Cl.: H01M 4/13, H01M 4/139, H01M 4/66, H01M 10/052, H01M 10/0566

(54) **NON-AQUEOUS SECONDARY CELL ELECTRODE, METHOD FOR MANUFACTURING SAME, AND NON-AQUEOUS SECONDARY CELL**

(30) Priority: 14.09.2015 JP 2015180284; 16.09.2015 JP 2015182420
(71) Applicant: Maxell Holdings, Ltd., Kyoto 618-8525 (JP)
(72) Inventor: TAZOE, Mitsuru, Oyamazaki-cho Otokuni-gun, Kyoto, 618-8525 (JP)
(74) Representative: Diehl & Partner GbR
(86) International application number: PCT/JP2016/077136
(87) International publication number: WO 2017/047653

(57) **Abstract**

Provided are a non-aqueous secondary battery electrode in which separation between an electrode mixture layer and a current collector can be suppressed, a method for manufacturing the non-aqueous secondary battery electrode, and a non-aqueous secondary battery including the non-aqueous secondary battery electrode. In a non-aqueous secondary battery electrode of the present invention, an electrode mixture layer containing an active material and a binder is provided on one side or both sides of a current collector. The current collector is made of austenitic stainless steel. The electrode mixture layer has a thickness of 200 µm or more. The non-aqueous secondary battery electrode of the present invention is further characterized in that (1) the current collector has a thickness of 1 to 12 µm, or (2) when the electrode mixture layer is divided into a region on a current collector side and a region on a surface side with respect to the center in a thickness direction, and the binder is contained in an amount of A mass% in the region on the current collector side and in an amount of B mass% in the region on the surface side, a ratio A/B is 0.60 to 0.95. A non-aqueous secondary battery of the present invention is characterized in that the non-aqueous secondary battery electrode of the present invention is used as at least one of a positive electrode and a negative electrode.

## Description

### Technical Field

The present invention relates to a non-aqueous secondary battery electrode in which separation between an electrode mixture layer and a current collector can be suppressed, a method for manufacturing the non-aqueous secondary battery electrode, and a non-aqueous secondary battery including the non-aqueous secondary battery electrode.

### Background Art

Conventionally, negative electrodes in which a negative electrode mixture layer containing a negative electrode active material and a binder is provided on one side or both sides of a current collector have been frequently used in non-aqueous secondary batteries. In general, the negative electrode current collectors are made of copper (including a copper alloy).

Recently, in response to demand for increasing the capacity of non-aqueous secondary batteries, a usage method has been investigated in which discharging is performed until the battery voltage reaches a lower value. However, when non-aqueous secondary batteries having a general configuration are used according to the above-mentioned method, the electric potential of the negative electrode becomes higher, and a problem thus arises in that copper included in the current collector is ionized and eluted to a non-aqueous electrolytic solution.

On the other hand, use of current collectors made of stainless steel in positive electrodes and negative electrodes has also been investigated (Patent Documents 1 and 2), and attempts have been made to use this technique to avoid the problem of copper ions being eluted from the negative electrode current collector, for example.

In order to increase the capacity of the non-aqueous secondary batteries, the volume occupied by the current collector, which is not involved in battery reaction, is reduced in the battery, and the thicknesses of the mixture layers of the positive electrodes and negative electrodes are increased for the purpose of increasing the amounts of active materials for the positive electrodes and negative electrodes that are introduced into the batteries.

However, the investigation conducted by the inventors of the present invention has revealed that in a case of electrodes using current collectors made of a specific type of stainless steel, an increase in the thickness of the electrode mixture layer makes it likely that the electrode mixture layer and the current collector will separate from each other.

In order to increase the adhesion between the electrode mixture layer and the current collector, a technique for forming an electrode mixture layer having a multilayer structure and adjusting the relationship between the binder contents in the respective layers, and a technique for controlling the binder distribution state in the negative electrode mixture layer have been proposed, for example (Patent Documents 3 and 4).

### Prior Art Documents

### Patent Documents

[Patent Document 1] JP 2011-91019A
[Patent Document 2] JP 2013-222696A
[Patent Document 3] JP 2013-191415A
[Patent Document 4] JP 2015-72793A

### Disclosure of Invention

### Problem to be Solved by the Invention

The technique disclosed in Patent Document 3 is effective in increasing the adhesion between the electrode mixture layer and the current collector. However, since the electrode mixture layer is formed to have a multilayer structure, there is a risk that a manufacturing step will become complicated, and there is room for improvement in this respect.

Moreover, with the technique disclosed in Patent Document 4, the binder distribution state is made suitable in the negative electrode active material layer (negative electrode mixture layer) of the negative electrode including the current collector made of copper, but the adhesion between the electrode mixture layer and the current collector cannot be sufficiently increased in the electrode in which a specific type of stainless steel is used for the current collector.

The present invention was achieved in light of the aforementioned circumstances, and it is an object thereof to provide a non-aqueous secondary battery electrode in which separation between an electrode mixture layer and a current collector can be suppressed, a method for manufacturing the non-aqueous secondary battery electrode, and a non-aqueous secondary battery including the non-aqueous secondary battery electrode.

### Means for Solving Problem

A first aspect of the non-aqueous secondary battery electrode of the present invention with which the above-mentioned object can be achieved is a non-aqueous secondary battery electrode to be used as a positive electrode or a negative electrode of a non-aqueous secondary battery, wherein an electrode mixture layer containing an active material and a binder is provided on one side or both sides of a current collector, the current collector is made of austenitic stainless steel, the current collector has a thickness of 1 to 12 µm, and the electrode mixture layer has a thickness of 200 µm or more.

A second aspect of the non-aqueous secondary battery electrode of the present invention is a non-aqueous secondary battery electrode in which an electrode mixture layer containing an active material and a binder is provided on one side or both sides of a current collector, wherein the current collector is made of austenitic stainless steel, the electrode mixture layer has a thickness of 200 µm or more, and when the electrode mixture layer is divided into a region on a current collector side and a region on a surface side with respect to the center in a thickness direction and the binder is contained in an amount of A mass% in the region on the current collector side and in an amount of B mass% in the region on the surface side, a ratio A/B is 0.60 to 0.95.

The above-mentioned non-aqueous secondary battery electrode of the first aspect can be manufactured using the manufacturing method of the present invention including a step of producing a laminate by forming the electrode mixture layer on one side or both sides of the current collector, and a step of punching or cutting a portion of the laminate in which the electrode mixture layer and the current collector are layered.

The above-mentioned non-aqueous secondary battery electrode of the second aspect can be manufactured using the manufacturing method of the present invention including a step of producing a laminate by applying a composition containing an electrode mixture that contains an active material, a binder, and a solvent to one side or both sides of the current collector, and forming the electrode mixture layer on one side or both sides of the current collector through drying, wherein, in the step of producing the laminate, the composition containing an electrode mixture in which a concentration of a solid component is 65 to 75 mass% is used, and a temperature at which the composition containing an electrode mixture is dried after being applied to the current collector is 85 to 105°C.

Furthermore, the non-aqueous secondary battery of the present invention is a non-aqueous secondary battery including a positive electrode, a negative electrode, a separator, and a non-aqueous electrolytic solution, wherein the non-aqueous secondary battery electrode of the present invention is used as at least one of the positive electrode and the negative electrode.

### Effects of the Invention

With the present invention, it is possible to provide a non-aqueous secondary battery electrode in which separation between an electrode mixture layer and a current collector can be suppressed, a method for manufacturing the non-aqueous secondary battery electrode, and a non-aqueous secondary battery including the non-aqueous secondary battery electrode.

### Brief Description of Drawings

[FIG. 1] FIG. 1 is a schematic longitudinal cross-sectional view of an example of a non-aqueous secondary battery electrode (negative electrode) of the present invention.
[FIG. 2] FIG. 2 is a diagram for illustrating a region on a current collector side and a region on a surface side in an electrode mixture layer.
[FIG. 3] FIG. 3 is a diagram for illustrating an arrangement of punched portions in a punching test performed on negative electrodes of examples.
[FIG. 4] FIG. 4 is a schematic longitudinal cross-sectional view of an example of a non-aqueous secondary battery of the present invention.
[FIG. 5] FIG. 5 is a diagram for illustrating a method for measuring separating strength between a negative electrode mixture layer and a current collector in negative electrodes of examples.

### Description of the Invention

A non-aqueous secondary battery electrode of the present invention (referred to merely as "electrode" hereinafter) has a structure in which an electrode mixture layer containing an active material and a binder is provided on one side or both sides of a current collector. It should be noted that a case where the electrode of the present invention is described without particularly showing that the electrode is that of the first aspect or the second aspect means that this is applicable to both the first aspect and the second aspect.

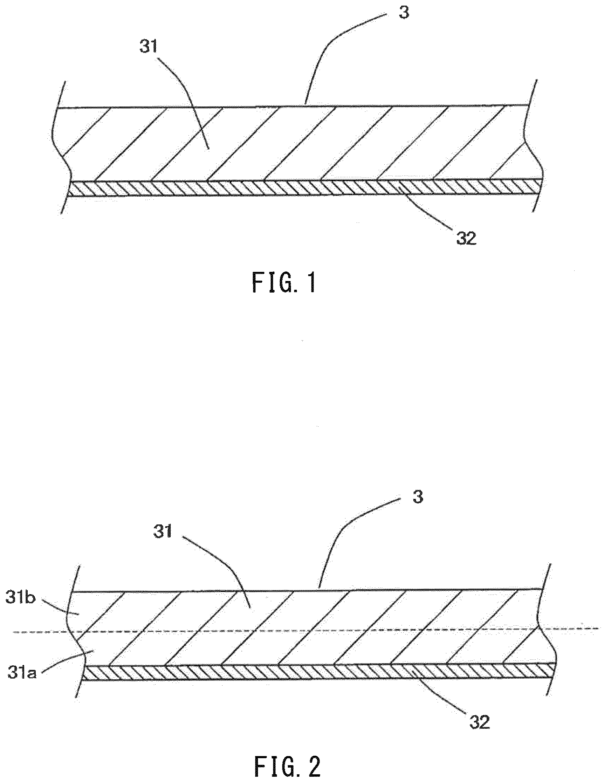

FIG. 1 is a schematic longitudinal cross-sectional view of the electrode of the present invention. The electrode shown in FIG. 1 is a negative electrode 3 in which a negative electrode mixture layer 31 is provided on one side of a current collector 32. Also, when the electrode of the present invention is a positive electrode, the electrode has a structure similar to that of the negative electrode shown in FIG. 1 or the like (i.e., a structure in which a positive electrode mixture layer is provided on one side or both sides of a current collector).

The electrode of the present invention includes a current collector made of austenitic stainless steel. Accordingly, regarding a non-aqueous secondary battery (non-aqueous secondary battery of the present invention) in which the electrode of the present invention is used as a negative electrode, the elution of metal ions from the negative electrode current collector can be suppressed even if discharging is performed until the battery voltage reaches a very low value, and thus better characteristics are imparted to the non-aqueous secondary battery.

Moreover, regarding the electrode of the present invention, the thickness of the electrode mixture layer (when the electrode mixture layers are formed on both sides of the current collector, "thickness" refers to the thickness of the layer on one side; the same applies hereinafter with respect to the thickness of the electrode mixture layer) is increased to 200 µm or more, thus making it possible to increase the capacity of the battery.

However, as described above, current collectors made of the above-mentioned type of stainless steel have poorer adhesion with the electrode mixture layer than current collectors made of aluminum (including an aluminum alloy) and copper (including a copper alloy) that are widely used in electrodes of non-aqueous secondary batteries. Therefore, when a thick electrode mixture layer as described above is formed, separation between the electrode mixture layer and the current collector is likely to occur. In particular, when the electrode is punched or cut so as to be adaptable to the form of the battery, the electrode mixture layer and the current collector will separate from each other due to the pressing force during the punching or cutting.

The above-mentioned type of stainless steel has a much higher hardness than aluminum (including an aluminum alloy) and copper (including a copper alloy), which are widely used in current collectors for electrodes, for example. The inventors of the present invention found that this was a cause of the above-mentioned separation.

Therefore, regarding the first aspect of the electrode of the present invention, the thickness of the current collector is reduced to 1 µm or more and 12 µm or less so that the current collector can sufficiently mitigate the pressing force applied thereto during the punching or cutting of the electrode, thus making it possible to suppress separation between the electrode mixture layer and the current collector.

As described later, an electrode mixture layer is generally formed through steps of applying an electrode mixture layer containing an active material, a binder, a solvent (e.g., organic solvent or water), and the like to a current collector, and drying it. However, the binder is likely to segregate on the surface of the electrode mixture layer (surface opposite to the current collector) through this drying, resulting in a decrease in the amount of the binder on the current collector side. Therefore, even if the electrode mixture layer contains a sufficient amount of the binder as a whole, there is a risk that only a very small amount of the binder contributes to the adhesion with the current collector, which becomes a factor that causes the above-mentioned problem when a current collector made of the above-mentioned type of stainless steel having a poor adhesion with the electrode mixture layer is used.

Therefore, the second aspect of the electrode of the present invention is configured such that a certain amount of the binder is present also in a region on the current collector side in the electrode mixture layer, thus increasing the amount of the binder that contributes to the adhesion with the current collector.

Specifically, in the second aspect of the electrode of the present invention, when the electrode mixture layer is divided into a region on the current collector side and a region on the surface side (region on a side opposite to the current collector side) with respect to the center in a thickness direction, and the binder is contained in an amount of A mass% in the region on the current collector side and in an amount of B mass% in the region on the surface side, the ratio A/B is 0.60 or more and preferably 0.65 or more, and 0.95 or less and preferably 0.92 or less.

FIG. 2 is a diagram (longitudinal cross-sectional view schematically showing a negative electrode) for illustrating the region on the current collector side and the region on the surface side as mentioned above in a case where a negative electrode mixture layer is used as an example of the electrode mixture layer. A dotted line in the negative electrode mixture layer 31 of the negative electrode 3 indicates the center of the negative electrode mixture layer 31 in the thickness direction. A region under this dotted line in this diagram is taken as a region 31a on the above-mentioned current collector side, and a region above this dotted line in this diagram is taken as a region 31b on the above-mentioned surface side. It should be noted that the electrode mixture layers (the positive electrode mixture layer and the negative electrode mixture layer) each need not be actually divided into two layers, namely the region on the current collector side and the region on the surface side, and a single layer may be formed in which the contents of components change in a gradient manner or a stepwise manner in the thickness direction, or the contents of components do not change in the thickness direction.

When the above-mentioned ratio A/B is within the above-mentioned range, the segregation of the binder in the electrode mixture layer is suppressed, and a relatively large amount of the binder is also present on the current collector side. Therefore, favorable adhesion is achieved between the electrode mixture layer and the current collector, thus making it possible to significantly suppress separation therebetween.

The content of the binder in the region on the current collector side of the electrode mixture layer, which is taken as A mass%, and the content of the binder in the region on the surface side in the electrode mixture layer, which is taken as B mass%, as used herein, can be determined using an EPMA method, which will be described below. First, the cross-sectional surface of the electrode is subjected to ion milling processing in order to expose it. Regarding the thus obtained sample of the electrode, an element derived from the binder (e.g., F (fluorine) when a fluororesin such as PVDF is used) is detected using an EPMA method and integrated in the thickness direction of the electrode mixture layer. In this case, A and B are determined according to the following equations: A=0.02×Z×X and B=0.02×Z×Y, where the ratio of the integral value of the element in the region on the current collector side with respect to the integral value of the element in the entire electrode mixture layer in the thickness direction is taken as the percentage X%, the ratio of the integral value of the element in the region on the surface side with respect to the integral value of the element in the entire electrode mixture layer in the thickness direction is taken as the percentage Y%, and the content of the binder in the electrode mixture layer is taken as the percentage Z% (mass%) by percentage (A and B in Examples, which will be described later, are values determined using this method).

When the electrode of the present invention is a negative electrode, examples of the negative electrode active material for the electrode mixture layer, that is, the negative electrode mixture layer, include those used in ordinary non-aqueous secondary batteries such as a lithium ion secondary battery, specifically including carbon materials such as graphite (e.g., natural graphite; and synthetic graphite obtained by performing graphitization on easily graphitizable carbon such as pyrolytic carbon, mesophase carbon microbeads (MCMB), or carbon fibers, at 2800°C or higher), pyrolytic carbon, coke, glassy carbon, fired products obtained by firing organic polymer compounds, MCMB, carbon fibers, and active carbon; metals (e.g., Si and Sn) capable of forming an alloy with lithium or materials (e.g., alloys) containing these metals; and lithium titanate. These materials may be used alone or in combination of two or more.

Lithium titanate that can be used as the negative electrode active material is preferably lithium titanate expressed by a general formula LiₓTi_{y}O₄ in which the stoichiometric numbers for x and y respectively satisfy 0.8≤x≤1.4 and 1.6≤y≤2.2, and particularly preferably lithium titanate in which the stoichiometric numbers for x and y respectively satisfy x=1.33 and y=1.67. The lithium titanate expressed by the general formula LiₓTi_{y}O₄ can be obtained by performing heat treatment at 760 to 1100°C on titanium oxide and a lithium compound, for example. Both anatase-type titanium oxide and rutile-type titanium oxide can be used as the above-mentioned titanium oxide, and examples of the lithium compound include lithium hydroxide, lithium carbonate, and lithium oxide.

Examples of the binder for the negative electrode mixture layer include polytetrafluoroethylene (PTFE), polyvinylidene fluoride (PVDF), carboxymethylcellulose (CMC), and styrene-butadiene rubber (SBR).

The negative electrode mixture layer may contain a conductive assistant if necessary. Examples of the conductive assistant for the negative electrode mixture layer include carbon black, flake graphite, Ketjen black, acetylene black, and fibrous carbon.

When the carbon material is used as the negative electrode active material, the composition of the negative electrode mixture layer (composition of the entire negative electrode mixture layer) is preferably set such that the content of the carbon material is 80 to 95 mass% and the content of the binder is 3 to 15 mass%, for example. When the conductive assistant is used therewith, the content of the conductive assistant is preferably 5 to 20 mass%. On the other hand, when the lithium titanate is used as the negative electrode active material, the composition of the negative electrode mixture layer (composition of the entire negative electrode mixture layer) is preferably set such that the content of the lithium titanate is 75 to 90 mass% and the content of the binder is 3 to 15 mass%, for example. When the conductive assistant is used therewith, the content of the conductive assistant is preferably 5 to 20 mass%.

When the electrode of the present invention is a positive electrode, examples of the positive electrode active material for the electrode mixture layer, that is, the positive electrode mixture layer, include lithium-transition metal composite oxides such as LiₓCoO₂, LiₓNiO₂, LiₓMnO₂, LiₓCo_{y}Ni_{1-y}O₂, LiₓCo_{y}M_{1-y}O₂, LiₓNi_{1-y}M_{y}O₂, LiₓMn_{y}Ni_{z}Co_{1-y-z}O₂, LiₓMn₂O₄, and LiₓMn_{2-y}M_{y}O₄ (it should be noted that in the above-mentioned lithium-transition metal composite oxides, M is at least one metallic element selected from the group consisting of Mg, Mn, Fe, Co, Ni, Cu, Zn, Al, and Cr, and x, y, and z respectively satisfy 0≤x≤1.1, 0<y<1.0, and 2.0≤z≤2.2). These positive electrode active materials may be used alone or in combination of two or more.

Examples of the binder for the positive electrode mixture include the same binders as the binders listed above as the examples of the binders that can be used in the negative electrode mixture layer.

In general, the positive electrode mixture layer contains a conductive assistant. Examples of the conductive assistant for the positive electrode mixture include the same conductive assistants as the conductive assistants listed above as the examples of the conductive assistants that can be used in the negative electrode mixture layer.

The composition of the positive electrode is preferably set such that in 100 mass% of the positive electrode mixture constituting the positive electrode, the content of the positive electrode active material is 75 to 90 mass%, the content of the conductive assistant is 5 to 20 mass%, and the content of the binder is 3 to 15 mass%.

In the electrode of the present invention, the electrode mixture layer has a thickness of 200 µm or more and preferably 230 µm or more. This makes it possible to increase the capacity of a non-aqueous secondary battery (non-aqueous secondary battery of the present invention) in which the electrode of the present invention is used. However, when the electrode includes the electrode mixture layer having an excessively large thickness, there is a risk that load characteristics of a battery in which such an electrode is used will deteriorate. Therefore, from the viewpoint of suppressing the deterioration of the load characteristics of a battery, the electrode mixture layer of the electrode of the present invention preferably has a thickness of 300 µm or less, and more preferably 270 µm or less.

It is preferable that the current collector of the electrode of the present invention has a thickness of 12 µm or less. It should be noted that in the first aspect of the electrode of the present invention, the current collector has a thickness of 12 µm or less.

As described above, the above-mentioned type of stainless steel has a much higher hardness than aluminum, which is widely used in current collectors of positive electrodes, and copper, which is widely used in current collectors of negative electrodes, for example. Therefore, when a pressing force is applied to the electrode while the electrode is punched or cut into a desired shape during the manufacture of the electrode, for example, the electrode mixture layer and the current collector are likely to separate from each other. When the electrode mixture layer is thin, the problem of separation between the electrode mixture and the current collector due to the above-mentioned pressing force is less likely to arise. However, when the electrode mixture layer has a large thickness of 200 µm or more as in the case of the electrode of the present invention, the problem of separation between the electrode mixture layer and the current collector is more likely to arise.

However, when the current collector has a thickness of 12 µm or less, the current collector can sufficiently mitigate the pressing force applied thereto during the punching or cutting of the electrode, thus making it possible to favorably suppress separation between the electrode mixture layer and the current collector during the manufacture of the electrode.

It should be noted that when the current collector is excessively thin, the handleability may deteriorate, or it may become difficult to manufacture the current collector. Therefore, the current collector of the electrode preferably has a thickness of 1 µm or more, and more preferably 5 µm or more.

It is preferable that stainless steel denoted by SUS316L, SUS316, or SUS304, which are signs for types of stainless steel in accordance with JIS standards amended in 2012, is used as austenitic stainless steel to form the current collector.

It is sufficient that the current collector for the electrode of the present invention is made of the above-mentioned type of stainless steel, and its form may be any of a foil, a punched metal, a net, and an expanded metal, and preferably a foil.

The electrode of the present invention can be manufactured using the manufacturing method of the present invention including a step of producing a laminate by forming an electrode mixture layer on one side or both sides of a current collector.

In the step of producing a laminate by forming an electrode mixture layer on one side or both sides of a current collector, for example, a composition (e.g., slurry or paste) containing an electrode mixture is prepared by dispersing an electrode mixture obtained by mixing an electrode active material, a binder, and optionally a conductive assistant and the like in water or an organic solvent such as N-methyl-2-pyrrolidone (NMP) (in this case, a composition containing an electrode mixture may be prepared by mixing a binder that has been dissolved or dispersed in water or a solvent in advance with an electrode active material and the like), the composition containing an electrode mixture is applied to one side or both sides of a current collector and dried, and then press molding is optionally performed to form an electrode mixture layer. A laminate is thus produced.

In order to adjust the above-mentioned ratio A/B to the above-mentioned value, it is sufficient that the concentration of a solid component (content of components excluding the solvent) in the composition containing an electrode mixture is set to 65 to 75 mass%, and the temperature at which the composition containing an electrode mixture is dried after being applied to the current collector is set to 85 to 105°C. Using such a method makes it possible to increase the adhesion between the electrode mixture layer and the current collector without forming the electrode mixture layer having a multilayer structure, and the electrode is thus produced more favorably.

As a drying method for drying the composition containing an electrode mixture that has been applied to the current collector, various methods can be used, including known drying methods that are conventionally used to manufacture electrodes, such as hot-air drying, infrared ray radiation drying, and drying by bringing a heater such as a hot plate into contact with a surface on the back side of the surface to which the composition containing an electrode mixture has been applied.

After the laminate (laminate including the electrode mixture layer and the current collector) is produced in accordance with the step of producing a laminate, the laminate is generally punched or cut into a shape corresponding to the form of a battery.

In this step of punching or cutting the laminate, portions of the laminate in which the electrode mixture layer and the current collector are layered are punched or cut. However, even when a laminate that includes a current collector made of the above-mentioned type of stainless steel and a thick electrode mixture layer is used, setting the thickness of the current collector as described above makes it possible to more favorably suppress separation between the electrode mixture layer and the current collector occurring in this step, for example.

When a negative electrode corresponding to the form of a battery is produced using the laminate including the electrode mixture layer and the current collector, the electrode mixture layer and the current collector are likely to separate from each other particularly in the case where punching is performed. Therefore, particularly in the case where the thickness of the current collector is set to the above-mentioned value, a negative electrode having a shape obtained through a punching step, more specifically, a negative electrode to be used in a flat-shaped non-aqueous secondary battery as described later (i.e., negative electrode having not a belt shape to be used in a wound electrode body but a shape to be used in a layered electrode body in which the negative electrode and a positive electrode are merely layered via a separator), prominently exhibits such an effect. It should be noted that even when the thickness of the current collector does not satisfy the above-mentioned value, an electrode having a shape obtained through a punching step may also be formed.

The electrode can be provided with a current collecting tab portion for electrical connection to another member in a battery. In this case, a portion of the current collector may be exposed without forming the electrode mixture layer thereon and used as the current collecting tab portion, or a separate lead piece may be further attached to the exposed portion of the current collector and used as the current collecting tab portion.

In the electrode of the present invention, employing the above-mentioned configuration (particularly the configuration according to the second aspect) makes it possible to set the separation strength between the electrode mixture layer and the current collector to 6 N/m or more and preferably 7 N/m or more.

The "separation strength between the electrode mixture layer and the current collector in the electrode" as used herein is a value that is determined using a method employed in the measurement of the separation strength between the negative electrode mixture layer of the negative electrode and the current collector in Examples, which will be described later.

The non-aqueous secondary battery of the present invention includes a positive electrode, a negative electrode, a separator, and a non-aqueous electrolytic solution. It is sufficient that the electrode of the present invention (the electrode of the first aspect or the electrode of the second aspect) is used as at least one of the positive electrode and the negative electrode, and there is no limitation on other constituents and the structural aspects. The constituents and the structural aspects employed in conventionally known non-aqueous secondary batteries such as a lithium ion secondary battery can be used.

A structure in which a positive electrode mixture layer containing a positive electrode active material, a conductive assistant, and a binder is formed on one side or both sides of a current collector, for example, can be applied to the positive electrode.

It should be noted that when only the positive electrode of the non-aqueous secondary battery is constituted by the electrode of the present invention, an electrode including a negative electrode mixture layer having the same composition as that of the negative electrode mixture layer described above when the electrode of the present invention is a negative electrode can be used as the negative electrode. In this case, the negative electrode mixture layer preferably has a thickness of 10 to 300 µm. Moreover, in this case, the negative electrode current collector can be constituted by that used in an ordinary non-aqueous secondary battery such as a lithium ion secondary battery, and specific examples thereof include those constituted by a foil, a punched metal, a net, and an expanded metal made of copper or a copper alloy that have a thickness of 5 to 30 µm. The foil is preferable.

It should be noted that when only the negative electrode of the non-aqueous secondary battery is constituted by the electrode of the present invention, an electrode including a positive electrode mixture layer having the same composition as that of the positive electrode mixture layer described above when the electrode of the present invention is a positive electrode can be used as the positive electrode. In this case, the positive electrode mixture layer preferably has a thickness of 30 to 300 µm. Moreover, in this case, the positive electrode current collector can be constituted by that used in an ordinary non-aqueous secondary battery such as a lithium ion secondary battery, and specific examples thereof include those constituted by a foil, a punched metal, a net, and an expanded metal made of aluminum or an aluminum alloy that have a thickness of 8 to 20 µm. The foil is preferable.

In the non-aqueous secondary battery of the present invention, the positive electrode and the negative electrode are used in the form of a laminate (layered electrode body) in which they are layered via a separator, or in the form of a wound body (wound electrode body) obtained by winding the above-mentioned laminate into a spiral shape.

As described above, particularly in the case where the thickness of the current collector is set to the above-mentioned value, the electrode of the present invention prominently exhibits its effect when prepared through a punching step. Therefore, it is preferable that the non-aqueous secondary battery of the present invention includes an electrode body in which a negative electrode in such a form is used, that is, a layered electrode body that is used in a state in which the positive electrode and the negative electrode are merely layered via a separator without being wound. It should be noted that even when the thickness of the current collector does not satisfy the above-mentioned value (which is a case of the electrode of the second aspect), the non-aqueous secondary battery of the present invention may also include the electrode in a form obtained through a punching step, and have a configuration including the above-mentioned layered electrode body.

There is no limitation on the numbers of the positive electrodes and the negative electrodes in the electrode body. However, in the non-aqueous secondary battery of the present invention, using the electrode of the present invention including a thick electrode mixture layer makes it possible to increase the capacity. Therefore, it is not preferable that the number of positive electrodes and negative electrodes in the electrode body is increased, thus increasing the volume of the current collector that occupies the inside of a battery, and it is particularly preferable that a single positive electrode and a single negative electrode are used.

The separator used herein is constituted by a microporous membrane made of a thermoplastic resin. Favorable examples of the thermoplastic resin constituting the separator include polyolefines such as polyethylene (PE), polypropylene (PP), an ethylene-propylene copolymer, and polymethylpentene. From the viewpoint of ensuring a favorable shutdown function, polyolefines having a melting point, that is, a melting temperature measured using a differential scanning calorimeter (DSC) in accordance with the regulations of JIS K 7121, of 100 to 180°C are more preferable.

Although the microporous membrane made of a thermoplastic resin that constitutes the separator may have any form as long as the microporous membrane has an ionic conductance according to which necessary battery properties can be obtained, ion-permeable microporous membranes (microporous films that are widely used as separators for batteries) with a large number of pores formed using a conventionally known dry or wet drawing method are preferable.

It is preferable that the separator has a thickness of 5 to 25 µm, for example, and a porosity of 30 to 70%, for example.

As the non-aqueous electrolytic solution for the non-aqueous secondary battery, an electrolytic solution prepared by dissolving an electrolyte (lithium salt) in an organic solvent including cyclic carbonic esters such as ethylene carbonate (EC), propylene carbonate, butylene carbonate, and vinylene carbonate; linear carbonic esters such as dimethyl carbonate, diethyl carbonate (DEC), and methylethyl carbonate; and ethers such as 1,2-dimethoxyethane, diglyme (diethyleneglycol methylether), triglyme (triethyleneglycol dimethylether), tetraglyme (tetraethyleneglycol dimethylether), 1,2-dimethoxyethane, 1,2-diethoxymethane, and tetrahydrofuran to a concentration of about 0.3 to 2.0 mol/L can be used. The above-mentioned organic solvents may be used alone or in combination of two or more.

Examples of the above-mentioned electrolyte include lithium salts such as LiBF₄, LiPF₆, LiAsF₆, LiSbF₆, LiClO₄, LiCF₃SO₃, LiC₄F₉SO₃, LiN(CF₃SO₂)₂, and LiN(C₂F₅SO₂)₂.

Moreover, the non-aqueous electrolytic solution may be made into a gel (gel-like electrolyte) using a gelling agent such as a known polymer.

There is no particular limitation on the form of the non-aqueous secondary battery of the present invention, and examples thereof include flat-shaped batteries (including coin-shaped batteries and button-shaped batteries; the same applies hereinafter) with a battery case that is sealed by crimping a sheathing case and a sealing case via a gasket or is sealed by welding a sheathing case and a sealing case; laminated batteries with a sheathing body made of a metal laminated film; and tubular batteries (cylindrical batteries and rectangular batteries (rectangular tubular batteries)) with a battery case that is sealed by crimping a sheathing can having a closed-ended tubular shape and a sealing plate via a gasket or is sealed by welding a sheathing can and a sealing plate. Any of these forms is possible.

It should be noted that when a sheathing body to be sealed by crimping is used, examples of a material for the gasket to be interposed between the sheathing case and the sealing case or between the sheathing can and the sealing plate include PP and nylon. In addition, when heat resistance is required in response to the application of the battery, examples thereof also include heat-resistant resins having a melting point of more than 240°C such as fluororesin (e.g., tetrafluoroethylene-perfluoroalkoxyethylene copolymer (PFA)), polyphenylene ether (PEE), polysulfone (PSF), polyarylate (PAR), polyether sulfone (PES), PPS, and PEEK. Moreover, when the battery is used in applications in which heat resistance is required, a glass hermetic seal can also be used to sealing the battery.

As described above, it is preferable that the non-aqueous secondary battery of the present invention includes a layered electrode body that is used in a state in which the positive electrode and the negative electrode are merely layered via a separator without being wound. It is particularly preferable that the non-aqueous secondary battery of the present invention has a flat shape as in the case of the above-mentioned flat-shaped batteries (batteries in which the positive electrode and the negative electrode in the above-mentioned layered electrode body are layered via the separator substantially in parallel (including a case of being arranged in parallel) to the flat surfaces of the sheathing case and the sealing case) or laminated batteries.

There is no particular limitation on the shape of the above-mentioned flat-shaped battery in a plan view, and the flat-shaped battery may have a circular shape, which is the most commonly-used shape of the conventionally known flat-shaped batteries, or a polygonal shape such as a rectangular (quadrangular) shape. It should be noted that in this specification, the polygonal shape such as a rectangular shape serving as the shape of the battery in a plan view encompasses shapes obtained by cutting corners and shapes obtained by curving corners. Moreover, it is sufficient that the shapes of the positive electrode and the negative electrode in a plan view (shapes of the portions on which the mixture layers are formed in a plan view) correspond to the shape of the battery in a plan view, and they can also be formed in substantially a circular shape (including a circular shape) or a polygonal shape such as a quadrangular shape (e.g., a rectangle or a square). It should be noted that when the electrode is formed in substantially a circular shape, for example, it is preferable that a portion corresponding to the position of the counter electrode at which the current collecting tab portion is arranged has a cutout shape in order to prevent contact with the current collecting tab portion of the counter electrode.

### Examples

Hereinafter, the present invention will be described in detail by way of examples. However, the present invention is not limited to the following examples.

### Example 1

A composition containing a negative electrode mixture (the concentration of a solid component was 69 mass%) was prepared by mixing 94 parts by mass of graphite serving as a negative electrode active material, 1 part by mass of carbon black serving as a conductive assistant, and a binder solution obtained by dissolving 5 parts by mass of PVDF in NMP in advance. The resultant composition containing a negative electrode mixture was applied to one side of a current collector constituted by a foil of SUS316L having a thickness of 5 µm, dried using a hot plate at 90°C for 13 minutes, and further dried under vacuum at 160°C for 3 hours, followed by roll pressing. A belt-shaped negative electrode was obtained by being cut to a predetermined size. It should be noted that this negative electrode had a width of 40 mm, and the negative electrode mixture layer had a thickness of 250 µm.

### Example 2

A belt-shaped negative electrode was produced in the same manner as in Example 1, except that the current collector was changed to a foil of SUS316L having a thickness of 10 µm.

### Example 3

A belt-shaped negative electrode was produced in the same manner as in Example 1, except that the current collector was changed to a foil of SUS316L having a thickness of 12 µm.

### Comparative Example 1

A belt-shaped negative electrode was produced in the same manner as in Example 1, except that the current collector was changed to a foil of SUS316L having a thickness of 15 µm.

### Comparative Example 2

A belt-shaped negative electrode was produced in the same manner as in Example 1, except that the current collector was changed to a foil of SUS316L having a thickness of 20 µm.

### Comparative Example 3

A belt-shaped negative electrode was produced in the same manner as in Example 1, except that the current collector was changed to a foil of SUS316L having a thickness of 20 µm, and the thickness of the negative electrode mixture layer was changed to 80 µm.

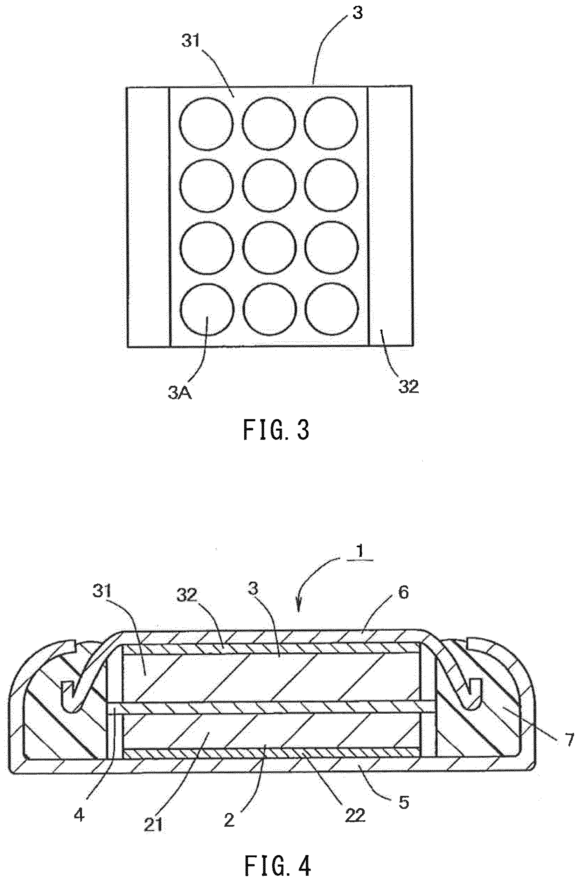

A punching test as described below was performed on the negative electrodes of Examples 1 to 3 and Comparative Examples 1 to 3. FIG. 3 is a diagram for illustrating the arrangement of punched portions in the negative electrode. After each of the negative electrodes 3 was cut such that a portion on which the negative electrode mixture layer 31 had been formed had an area of 40 mm × 30 mm as shown in FIG. 3, a punching punch having a diameter of 7.4 mm was used to punch the negative electrode 3 at 12 positions in total, namely 3 positions in a short direction and 4 positions in a longitudinal direction, with 2-mm intervals between the punched portions. Circular portions shown in FIG. 3 each indicate a punched portion 3A. Then, the number of punched-out negative electrodes in which the negative electrode mixture layer and the current collector did not separate from each other was determined.

### Table 1 shows the results.

**Table 1**

| | Configuration of current collector | | Thickness of negative electrode mixture layer (µm) | Number of negative electrodes in which negative electrode mixture layer and current collector separated from each other / total number |
|---|---|---|---|---|
| | Constituent metal | Thickness (µm) | | |
| Ex. 1 | SUS316L | 5 | 250 | 0/12 |
| Ex. 2 | SUS316L | 10 | 250 | 0/12 |
| Ex. 3 | SUS316L | 12 | 250 | 0/12 |
| Comp. Ex. 1 | SUS316L | 15 | 250 | 8/12 |
| Comp. Ex. 2 | SUS316L | 20 | 250 | 12/12 |
| Comp. Ex. 3 | SUS316L | 20 | 80 | 0/12 |

As shown in Table 1, although the negative electrodes of Examples 1 to 3 in which the current collectors that were made of a specific type of stainless steel and had an appropriate thickness were used included the negative electrode mixture layers having a large thickness of 250 µm, separation between the negative electrode mixture layer and the current collector due to punching did not occur.

In contrast, in some of the negative electrodes of Comparative Examples 1 and 2 in which the current collectors that had an inappropriate thickness were used, separation between the negative electrode mixture layer and the current collector due to punching occurred. It should be noted that although the negative electrode of Comparative Example 3 in which the negative electrode mixture layer had a small thickness of 80 µm included the current collector having a large thickness of 20 µm, separation between the negative electrode mixture layer and the current collector due to punching did not occur. It is thus found that separation between the negative electrode mixture layer and the current collector due to punching is a problem specific to the case where the negative electrode mixture layer has a large thickness.

### Example 4

### Production of positive electrode

A composition containing a positive electrode mixture was prepared by mixing 93 parts by mass of LiCoO₂ serving as a positive electrode active material and 3 parts by mass of carbon black serving as a conductive assistant, and mixing the resultant mixture with a binder solution obtained by dissolving 4 parts by mass of PVDF serving as a binder in NMP in advance. The resultant composition containing a positive electrode mixture was applied to one side of a positive electrode current collector constituted by a foil of aluminum having a thickness of 15 µm, and was dried, and thereafter was subjected to roll pressing. A belt-shaped positive electrode was obtained by being cut to a predetermined size. It should be noted that this positive electrode had a width of 40 mm, and the positive electrode mixture layer had a thickness of 250 µm. This belt-shaped positive electrode was punched into a circular shape having a diameter of 6.4 mm, and a positive electrode for a battery was thus obtained.

### Assembly of battery

The negative electrode of Example 2 punched out in the punching test, a separator, and the above-mentioned positive electrode for a battery were layered in this order inside a sealing case made of stainless steel to which an insulating gasket made of nylon had been attached, and a non-aqueous electrolytic solution (solution obtained by dissolving LiPF₆ to a concentration of 1.2 mol/l in a mixed solvent in which ethylene carbonate and methylethyl carbonate were mixed at a volume ratio of 1:2) was poured into the sealing case. Thereafter, the sealing case was covered with a sheathing case made of stainless steel, and the portion therearound was crimped. A flat-shaped non-aqueous secondary battery that had a circular shape in a plan view, had a structure shown in FIG. 4, and had a diameter of 9 mm and a thickness of 1 mm was thus obtained.

FIG. 4 is a schematic longitudinal cross-sectional view of the flat-shaped non-aqueous secondary battery of Example 4. In the flat-shaped non-aqueous secondary battery 1 of Example 4, the positive electrode 2 including the current collector 22 provided with the positive electrode mixture layer 21 on one side is accommodated in the sheathing case 5 made of stainless steel, and the negative electrode 3 is arranged on the positive electrode 2 via the separator 4. Moreover, the negative electrode 3 includes the current collector 32 provided with the negative electrode mixture layer 31 on one side. Furthermore, the non-aqueous electrolytic solution (not shown) is poured into the battery 1.

In the flat-shaped non-aqueous secondary battery 1, the exposed surface of the current collector 22 of the positive electrode 2 is in contact with the inner surface of the sheathing case 5 and is thus electrically connected thereto. This sheathing case 5 also serves as a positive electrode terminal. In addition, the exposed surface of the current collector 32 of the negative electrode is in contact with the inner surface of the sealing case 6 and is thus electrically connected thereto. This sealing case 6 also serves as a negative electrode terminal. The sealing case 6 is fitted to the opening of the sheathing case 5 via the insulating gasket 7 made of nylon. The open end of the sheathing case 5 is fastened inward, and the insulating gasket 7 is thus brought into contact with the sealing case 6. Thereby, the opening of the sheathing case 5 is sealed, and the structure in which the inside of the battery is sealed off is obtained. Specifically, the flat-shaped non-aqueous secondary battery 1 includes the sheathing case 5, the sealing case 6, and the insulating gasket 7 interposed therebetween, and the electrode body in which the positive electrode 2, the separator 4, and the negative electrode 3 are layered, and the non-aqueous electrolytic solution are accommodated in the sealed battery case.

### Comparative Example 4

A belt-shaped negative electrode was produced in the same manner as in Example 1, except that the current collector was changed to a foil of copper having a thickness of 10 µm. A flat-shaped non-aqueous secondary battery was produced in the same manner as in Example 4, except that a negative electrode obtained by punching the belt-shaped negative electrode into a circular shape using a punching punch having a diameter of 7.4 mm was used.

The evaluation of discharging characteristics of the flat-shaped non-aqueous secondary batteries of Example 4 and Comparative Example 4 was performed as follows. First, the batteries were charged with a constant current and a constant voltage as follows: the batteries were charged to 4.2 V with a constant current at a current value of 0.4 C (0.8 mA) with respect to the rated capacities and subsequently charged with a constant voltage of 4.2 V until the current value reached 0.1 C (0.2 mA). Thereafter, the batteries were discharged with a constant current as follows; the batteries were discharged to 3.0 V at a current value of 0.02 C (0.04 mA). The discharged batteries were charged with a constant current and a constant voltage in the same conditions as mentioned above, and then were discharged with a constant current as follows: the batteries were discharged to 3.0 V at a current value of 0.2 C (0.4 mA). The discharging capacity maintenance rates of the batteries were determined as a percentage by dividing the discharging capacities at a current value of 0.2 C by the discharging capacities at a current value of 0.02 C, and these rates were taken as discharging load characteristics. Table 2 shows the evaluation results.

**Table 2**

| | Discharging load characteristics Capacity maintenance rate (%) |
|---|---|
| Ex. 4 | 96.4 |
| Comp. Ex. 4 | 93.7 |

As described above, the battery of Comparative Example 4 is an example of a battery in which a negative electrode including a current collector made of copper, which has been widely used conventionally, is used. Although the reason is not obvious, as shown in Table 2, contrary to expectation, the flat-shaped non-aqueous secondary battery of Example 4 in which the negative electrode including the current collector made of a specific type of stainless steel having a higher electric resistance than copper was used had better discharging characteristics (discharging load characteristics) than the battery of Comparative Example 4.

### Comparative Example 5

A belt-shaped negative electrode was produced in the same manner as in Example 1, except that the current collector was changed to a foil of SUS430 having a thickness of 10 µm. A flat-shaped non-aqueous secondary battery was produced in the same manner as in Example 4, except that a negative electrode obtained by punching the belt-shaped negative electrode into a circular shape using a punching punch having a diameter of 7.4 mm was used.

A discharging storage test below was performed on the flat-shaped non-aqueous secondary batteries of Example 4 and Comparative Example 5. The batteries were charged with a constant current and a constant voltage as follows: the batteries were charged to 4.2 V with a constant current at a current value of 0.4 C (0.8 mA) with respect to the rated capacities and subsequently charged with a constant voltage of 4.2 V until the current value reached 0.1 C (0.2 mA). Thereafter, the batteries were discharged with a constant current as follows: the batteries were discharged to 0.0 V at a current value of 0.02 C (0.04 mA). The discharged batteries were stored for 3 days in a constant temperature chamber in which the temperature was set to 60°C, in a state in which the positive electrode and the negative electrode were short-circuited using a metal clip. After storage, the batteries were disassembled, and the surfaces of the insulating gaskets were observed. It was determined whether or not metal was eluted from the negative electrode current collector based on the presence or absence of a deposit. Table 3 shows the results.

**Table 3**

| | Configuration of current collector | | Thickness of negative electrode mixture layer (µm) | Discharging storage test |
|---|---|---|---|---|
| | Constituent Metal | Thickness (µm) | | |
| Ex. 4 | SUS316L | 10 | 250 | Not eluted |
| Comp. Ex. 5 | SUS430 | 10 | 250 | Eluted |

The above-mentioned discharging storage test corresponds to an acceleration test based on the assumption of a usage method in which discharging is performed until the battery voltage reaches a very low value (e.g., 0 V). As shown in Table 3, in the flat-shaped non-aqueous secondary battery of Example 4 in which the negative electrode including the current collector made of austenitic stainless steel was used, metal was not eluted from the negative electrode current collector.

In contrast, in the battery of Comparative Example 5 in which the negative electrode including the current collector made of SUS430, which is ferritic stainless steel, was used, the elution of metal from the negative electrode current collector was observed. Therefore, when charging and discharging are repeatedly performed under the condition that discharging is performed until the battery voltage reaches a very low value, there is a risk that metal will be eluted from the negative electrode current collector in the battery of Comparative Example 5, but such a phenomenon can be suppressed in the battery of Example 4.

### Example 5

A composition containing a negative electrode mixture (the concentration of a solid component was 69 mass%) was prepared by mixing 94 parts by mass of graphite serving as a negative electrode active material, 1 part by mass of carbon black serving as a conductive assistant, and a binder solution obtained by dissolving 5 parts by mass of PVDF in NMP in advance. The resultant composition containing a negative electrode mixture was applied with a constant thickness to one side of a current collector constituted by a foil of SUS316L having a thickness of 10 µm, and dried using a hot plate at 85°C (temperature at the surface of the hot plate; the same applies hereinafter regarding the temperature during drying on the hot plate) for 15 minutes to form a negative electrode mixture layer. Drying was further performed under vacuum at 160°C for 3 hours, followed by roll pressing. A belt-shaped negative electrode was obtained by being cut to a predetermined size. It should be noted that this negative electrode had a width of 40 mm, and the negative electrode mixture layer had a thickness of 250 µm.

In the resultant negative electrode, the binder content A in a region on the current collector side in the negative electrode mixture layer was 4.86 mass%, the binder content B in a region on the surface side was 5.14 mass%, and the ratio A/B was 0.95.

### Example 6

A negative electrode was produced in the same manner as in Example 5, except that the temperature at which the composition containing a negative electrode mixture was dried using the hot plate after being applied to the current collector was set to 90°C, and the drying time was changed to 13 minutes. In the resultant negative electrode, the binder content A in a region on the current collector side in the negative electrode mixture layer was 4.72 mass%, the binder content B in a region on the surface side was 5.28 mass%, and the ratio A/B was 0.89.

### Example 7

A negative electrode was produced in the same manner as in Example 5, except that the temperature at which the composition containing a negative electrode mixture was dried using the hot plate after being applied to the current collector was set to 100°C, and the drying time was changed to 9 minutes. In the resultant negative electrode, the binder content A in a region on the current collector side in the negative electrode mixture layer was 4.13 mass%, the binder content B in a region on the surface side was 5.87 mass%, and the ratio A/B was 0.7.

### Example 8

A negative electrode was produced in the same manner as in Example 5, except that the temperature at which the composition containing a negative electrode mixture was dried using the hot plate after being applied to the current collector was set to 105°C, and the drying time was changed to 7 minutes. In the resultant negative electrode, the binder content A in a region on the current collector side in the negative electrode mixture layer was 3.79 mass%, the binder content B in a region on the surface side was 6.21 mass%, and the ratio A/B was 0.61.

### Example 9

A negative electrode in which the negative electrode mixture layer had a thickness of 200 µm was produced in the same manner as in Example 5, except that the thickness of the composition containing a negative electrode mixture applied to the current collector was changed, the temperature at which the composition containing a negative electrode mixture was dried using the hot plate was set to 90°C, and the drying time was changed to 11 minutes. In the resultant negative electrode, the binder content A in a region on the current collector side in the negative electrode mixture layer was 4.77 mass%, the binder content B in a region on the surface side was 5.23 mass%, and the ratio A/B was 0.91.

### Example 10

A negative electrode in which the negative electrode mixture layer had a thickness of 300 µm was produced in the same manner as in Example 5, except that the thickness of the composition containing a negative electrode mixture applied to the current collector was changed, the temperature at which the composition containing a negative electrode mixture was dried using the hot plate was set to 90°C, and the drying time was changed to 15 minutes. In the resultant negative electrode, the binder content A in a region on the current collector side in the negative electrode mixture layer was 4.3 mass%, the binder content B in a region on the surface side was 5.7 mass%, and the ratio A/B was 0.75.

### Comparative Example 6

A negative electrode was produced in the same manner as in Example 5, except that the temperature at which the composition containing a negative electrode mixture was dried using the hot plate after being applied to the current collector was set to 110°C, and the drying time was changed to 5 minutes. In the resultant negative electrode, the binder content A in a region on the current collector side in the negative electrode mixture layer was 3.29 mass%, the binder content B in a region on the surface side was 6.71 mass%, and the ratio A/B was 0.49.

### Comparative Example 7

A negative electrode was produced in the same manner as in Example 5, except that the temperature at which the composition containing a negative electrode mixture was dried using the hot plate after being applied to the current collector was set to 120°C, and the drying time was changed to 3 minutes. In the resultant negative electrode, the binder content A in a region on the current collector side in the negative electrode mixture layer was 2.42 mass%, the binder content B in a region on the surface side was 7.58 mass%, and the ratio A/B was 0.32.

### Comparative Example 8

A negative electrode was produced in the same manner as in Example 9, except that the temperature at which the composition containing a negative electrode mixture was dried using the hot plate after being applied to the current collector was set to 120°C, and the drying time was changed to 3 minutes. In the resultant negative electrode, the binder content A in a region on the current collector side in the negative electrode mixture layer was 3.18 mass%, the binder content B in a region on the surface side was 6.82 mass%, and the ratio A/B was 0.47.

### Comparative Example 9

A negative electrode was produced in the same manner as in Example 7, except that the current collector was changed to a foil of Cu having a thickness of 10 µm. In the resultant negative electrode, the binder content A in a region on the current collector side in the negative electrode mixture layer was 2.40 mass%, the binder content B in a region on the surface side was 7.60 mass%, and the ratio A/B was 0.32.

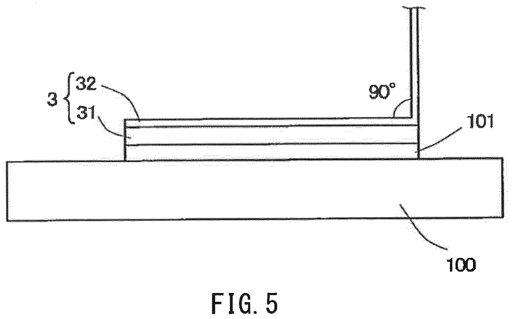

A separation strength test below was performed on the negative electrodes of Examples 5 to 10 and Comparative Examples 6 to 9. As shown in FIG. 5, the negative electrode 3 was fixed to a basement jig 100 using double-sided adhesive tape 101. When fixed thereto, the negative electrode 3 was arranged such that the negative electrode mixture layer 31 was located on the basement jig 100 side. Thereafter, the current collector 32 of the negative electrode 3 was pulled in the vertical direction at a speed of 60 mm/minute and removed from the negative electrode mixture layer 31 over a length of 30 mm. The tensional force during that period was measured, and the average value was taken as the separation strength between the negative electrode mixture layer and the current collector.

The punching test was performed on the negative electrodes of Examples 5 to 10 and Comparative Examples 6 to 9 in the same manner as the negative electrode of Example 1 and the like, and the number of punched-out negative electrodes in which the negative electrode mixture layer and the current collector did not separate from each other was determined.

Tables 4 and 5 show the configurations of the negative electrodes of Examples 5 to 10 and Comparative Examples 6 to 9, the conditions in which the negative electrode mixture layers were formed, and the evaluation results. It should be noted that "A/B" in Table 5 means the ratio A/B, namely the ratio of the binder content A (mass%) in a region on the current collector side in the negative electrode mixture layer with respect to the binder content B (mass%) in a region on the surface side.

**Table 4**

| | Constituent metal of current collector | Thickness of negative electrode mixture layer (µm) | Drying temperature after application of composition containing negative electrode mixture (°C) | Drying time after application of composition containing negative electrode mixture |
|---|---|---|---|---|
| Ex. 5 | SUS316L | 250 | 85 | 15 |
| Ex. 6 | SUS316L | 250 | 90 | 13 |
| Ex. 7 | SUS316L | 250 | 100 | 9 |
| Ex. 8 | SUS316L | 250 | 105 | 7 |
| Ex. 9 | SUS316L | 200 | 90 | 11 |
| Ex. 10 | SUS316L | 300 | 90 | 15 |
| Comp. Ex. 6 | SUS316L | 250 | 110 | 5 |
| Comp. Ex. 7 | SUS316L | 250 | 120 | 3 |
| Comp. Ex. 8 | SUS316L | 200 | 120 | 3 |
| Comp. Ex. 9 | Cu | 250 | 120 | 3 |

**Table 5**

| | A/B | Separation strength between negative electrode mixture layer and current collector (N/m) | Number of negative electrodes in which negative electrode mixture layer and current collector separated from each other / total number |
|---|---|---|---|
| Ex. 5 | 0.95 | 8.5 | 0/12 |
| Ex. 6 | 0.89 | 8.4 | 0/12 |
| Ex. 7 | 0.70 | 7.2 | 0/12 |
| Ex. 8 | 0.61 | 6.0 | 0/12 |
| Ex. 9 | 0.91 | 9.2 | 0/12 |
| Ex. 10 | 0.75 | 7.8 | 0/12 |
| Comp. Ex. 6 | 0.49 | 1.8 | 2/12 |
| Comp. Ex. 7 | 0.32 | 0 | 12/12 |
| Comp. Ex. 8 | 0.47 | 1.2 | 1/12 |
| Comp. Ex. 9 | 0.32 | 15 | 0/12 |

As shown in Table 5, regarding the negative electrodes of Examples 5 to 10 provided with the negative electrode mixture layers having the appropriate ratios A/B, although the current collectors made of the above-mentioned specific type of stainless steel were used, and the negative electrode mixture layers were thick, the separation strength between the negative electrode mixture layer and the current collector was large, separation between the negative electrode mixture layer and the current collector was not observed after punching, and adhesion therebetween was favorable.

In contrast, regarding the negative electrodes of Comparative Examples 6 to 8 provided with the negative electrode mixture layers having the inappropriate ratios A/B, the separation strength between the negative electrode mixture layer and the current collector was small, separation between the negative electrode mixture layer and the current collector occurred after punching in some of the negative electrodes, and adhesion therebetween was poor.

Regarding Comparative Example 9 in which a foil of Cu was used in the current collector, although the negative electrode mixture layer had the inappropriate ratio A/B, the separation strength between the negative electrode mixture layer and the current collector was large, and there was no problem.

### Example 11

### Production of positive electrode

A composition containing a positive electrode mixture was prepared by mixing 93 parts by mass of LiCoO₂ serving as a positive electrode active material and 3 parts by mass of carbon black serving as a conductive assistant, and mixing the resultant mixture with a binder solution obtained by dissolving 4 parts by mass of PVDF serving as a binder in NMP in advance. The resultant composition containing a positive electrode mixture was applied to one side of a positive electrode current collector constituted by a foil of aluminum having a thickness of 15 µm, and was dried, and thereafter was subjected to roll pressing. A belt-shaped positive electrode was obtained by being cut to a predetermined size. It should be noted that this positive electrode had a width of 40 mm, and the positive electrode mixture layer had a thickness of 250 µm. This belt-shaped positive electrode was punched into a circular shape having a diameter of 6.4 mm, and a positive electrode for a battery was thus obtained.

### Production of negative electrode

The belt-shaped negative electrode obtained in Example 6 was punched into a circular shape having a diameter of 7.4 mm, and a negative electrode for a battery was thus obtained.

### Assembly of battery

The above-mentioned negative electrode for a battery, a separator, and the above-mentioned positive electrode for a battery were layered in this order inside a sealing case made of stainless steel to which an insulating gasket made of nylon had been attached, and a non-aqueous electrolytic solution (solution obtained by dissolving LiPF₆ to a concentration of 1.2 mol/l in a mixed solvent in which ethylene carbonate and methylethyl carbonate were mixed at a volume ratio of 1:2) was poured into the sealing case. Thereafter, the sealing case was covered with a sheathing case made of stainless steel, and the portion therearound was crimped. A flat-shaped non-aqueous secondary battery that had a circular shape in a plan view, had a structure shown in FIG. 4, and had a diameter of 9.0 mm and a thickness of 1.0 mm was thus obtained.

### Comparative Example 10

A belt-shaped negative electrode was produced in the same manner as in Example 1, except that the current collector was changed to a foil of copper having a thickness of 10 µm. A flat-shaped non-aqueous secondary battery was produced in the same manner as in Example 11, except that a negative electrode obtained by punching the belt-shaped negative electrode into a circular shape having a diameter of 7.4 mm was used.

The evaluation of the discharging characteristics (the measurement of the discharging load characteristics (capacity maintenance rates)) of the flat-shaped non-aqueous secondary batteries of Example 11 and Comparative Example 10 was performed in the same manner as the battery of Example 4 and the like. Table 6 shows the evaluation results.

**Table 6**

| | Discharging load characteristics Capacity maintenance rate (%) |
|---|---|
| Ex. 11 | 96.4 |
| Comp. Ex. 10 | 93.7 |

As described above, the battery of Comparative Example 10 is an example of a battery in which a negative electrode including a current collector made of copper, which has been widely used conventionally, is used. Although the reason is not obvious, as shown in Table 6, contrary to expectation, the flat-shaped non-aqueous secondary battery of Example 11 in which the negative electrode including the current collector made of a specific type of stainless steel having a higher electric resistance than copper was used had better discharging characteristics (discharging load characteristics) than the battery of Comparative Example 10.

### Comparative Example 11

A belt-shaped negative electrode was produced in the same manner as in Example 6, except that the current collector was changed to a foil of SUS430 having a thickness of 10 µm. A flat-shaped non-aqueous secondary battery was produced in the same manner as in Example 11, except that a negative electrode obtained by punching the belt-shaped negative electrode into a circular shape using a punching punch having a diameter of 7.4 mm was used.

The discharging storage test (confirmation of whether or not metal was eluted from the negative electrode current collector) was performed on the flat-shaped non-aqueous secondary batteries of Example 11 and Comparative Example 11 in the same manner as the battery of Example 4 and the like. Table 7 shows the results.

**Table 7**

| | Constituent metal of current collector | Thickness of negative electrode mixture layer (µm) | Discharging storage test |
|---|---|---|---|
| Ex. 11 | SUS316L | 250 | Not eluted |
| Comp. Ex. 11 | SUS430 | 250 | Eluted |

The above-mentioned discharging storage test corresponds to an acceleration test based on the assumption of a usage method in which discharging is performed until the battery voltage reaches a very low value (e.g., 0 V). As shown in Table 7, in the flat-shaped non-aqueous secondary battery of Example 11 in which the negative electrode including the current collector made of austenitic stainless steel was used, metal was not eluted from the negative electrode current collector.

In contrast, in the battery of Comparative Example 11 in which the negative electrode including the current collector made of SUS430, which is ferritic stainless steel, was used, the elution of metal from the negative electrode current collector was observed. Therefore, when charging and discharging are repeatedly performed under the condition that discharging is performed until the battery voltage reaches a very low value, there is a risk that metal will be eluted from the negative electrode current collector in the battery of Comparative Example 11, but such a phenomenon can be suppressed in the battery of Example 11.

The present invention may be embodied in other forms without departing from the spirit or essential characteristics thereof. The embodiments disclosed in this application are to be considered in all respects as illustrative and not limiting. The scope of the present invention is indicated by the appended claims rather than by the foregoing description, and all changes which come within the meaning and range of equivalency of the claims are intended to be embraced therein.

### Industrial Applicability

The non-aqueous secondary battery of the present invention can be used in the same applications as those in which a conventionally known non-aqueous secondary battery such as a lithium ion secondary battery is employed.

### Description of Reference Numerals

- 1: Non-aqueous secondary battery
- 2: Positive electrode
- 21: Positive electrode mixture layer
- 22: Positive electrode current collector
- 3: Negative electrode
- 3A: Punched portion in negative electrode
- 31a: Region on current collector side in negative electrode mixture layer
- 31b: Region on surface side in negative electrode mixture layer
- 31: Negative electrode mixture layer
- 32: Negative electrode current collector
- 4: Separator
- 5: Sheathing case
- 6: Sealing case
- 7: Insulating gasket

## Claims

1. A non-aqueous secondary battery electrode to be used as a positive electrode or a negative electrode of a non-aqueous secondary battery,
wherein an electrode mixture layer containing an active material and a binder is provided on one side or both sides of a current collector,
the current collector is made of austenitic stainless steel,
the current collector has a thickness of 1 to 12 µm, and
the electrode mixture layer has a thickness of 200 µm or more.

2. A non-aqueous secondary battery electrode in which an electrode mixture layer containing an active material and a binder is provided on one side or both sides of a current collector,
wherein the current collector is made of austenitic stainless steel,
the electrode mixture layer has a thickness of 200 µm or more, and
when the electrode mixture layer is divided into a region on a current collector side and a region on a surface side with respect to the center in a thickness direction and the binder is contained in an amount of A mass% in the region on the current collector side and in an amount of B mass% in the region on the surface side, a ratio A/B is 0.60 to 0.95.

3. The non-aqueous secondary battery electrode according to claim 2, wherein the current collector has a thickness of 1 to 12 µm.

4. The non-aqueous secondary battery electrode according to claim 2 or 3, wherein the binder is contained in an amount of 3 to 15 mass% in the electrode mixture layer.

5. The non-aqueous secondary battery electrode according to any one of claims 2 to 4, wherein separation strength between the electrode mixture layer and the current collector is 6 N/m or more.

6. The non-aqueous secondary battery electrode according to any one of claims 1 to 5, wherein the current collector is made of one of SUS316L, SUS316, and SUS304.

7. The non-aqueous secondary battery electrode according to any one of claims 1 to 6, which is to be used in a flat-shaped non-aqueous secondary battery configured such that, in a space formed by sealing a sheathing case and a sealing case via an insulating gasket through crimping, an electrode body in which a positive electrode and a negative electrode are layered via a separator substantially in parallel to flat surfaces of the sheathing case and the sealing case is accommodated.

8. A non-aqueous secondary battery comprising:
a positive electrode;
a negative electrode;
a separator; and
a non-aqueous electrolytic solution,
wherein the non-aqueous secondary battery electrode according to any one of claims 1 to 7 is used as at least one of the positive electrode and the negative electrode.

9. A method for manufacturing the non-aqueous secondary battery electrode according to claim 1, the method comprising:
a step of producing a laminate by forming the electrode mixture layer on one side or both sides of the current collector; and
a step of punching or cutting a portion of the laminate in which the electrode mixture layer and the current collector are layered.

10. A method for manufacturing the non-aqueous secondary battery electrode according to claim 2, the method comprising:
a step of producing a laminate by applying a composition containing an electrode mixture that contains an active material, a binder, and a solvent to one side or both sides of the current collector, and forming the electrode mixture layer on one side or both sides of the current collector through drying,
wherein, in the step of producing the laminate, the composition containing an electrode mixture in which a concentration of a solid component is 65 to 75 mass% is used, and a temperature at which the composition containing an electrode mixture is dried after being applied to the current collector is 85 to 105°C.

11. The method for manufacturing the non-aqueous secondary battery electrode according to claim 10, further comprising a step of punching or cutting a portion of the laminate in which the electrode mixture layer and the current collector are layered, the step being performed subsequently to the step of producing a laminate.
